# EUROPEAN PATENT SPECIFICATION

(11) **EP 3 455 071 B1**
(45) Date of publication and mention of the grant of the patent: **18.12.2019**
(21) Application number: 17722734.5
(22) Date of filing: 08.05.2017
(51) Int. Cl.: B60C 1/00, B60C 9/18, B60C 9/00, C08L 7/00, C08L 57/02

(54) **BELTS WITH METAL PLIES FOR TYRES**
GÜRTEL MIT METALLISCHEN LAGEN FÜR REIFEN
COURROIES À PLIS MÉTALLIQUES POUR PNEUS

(30) Priority: 10.05.2016 IT UA20163301
(43) Date of publication of application: 20.03.2019
(73) Proprietor: Bridgestone Corporation, Tokyo 104-8340 (JP)
(72) Inventor: MADAU, Francesco, 00128 Roma (IT); COLLETTI, Marco, 00128 Roma (IT)
(74) Representative: Marchetti, Alessio
(86) International application number: PCT/EP2017/060957
(87) International publication number: WO 2017/194484

(56) References cited:
- WO-A2-2013/102186
- US-A1- 2012 175 033
- US-A1- 2014 352 865
- US-A1- 2016 040 024

## Description

The present invention relates to belts with metal plies for tyres made using a solution such as to impart advantages in terms of rolling resistance and productivity.
In order to ensure the required resistance standards, reinforcing plies are utilized in tyres that are made from a textile material (nylon, rayon, polyester, aramid) and/or a metallic material, such as steel.

Reinforcing plies are commonly utilized as a reinforcing material within the carcass and the belts. The latter in particular are arranged between the carcass and the tread and serve to further increase the resistance of the tyre, stabilizing the tread and providing protection against shocks and punctures to the most inner layers.

Generally, the plies are treated with an adhesive and, subsequently, are rubberized until they have a thickness of about 1 mm. The rubber coating of the plies is commonly referred to by the English term "tread ply skim" and this term will be utilized within the description that follows and in the attached claims.

In particular, belts with metal plies are basically made by means of the coupling two layers of tread ply skim, each of which includes a plurality of metallic cords arranged parallel to one another. The coupling of the two tread ply skim layers is made in such a way that the cords of one layer are arranged perpendicularly to the cords of the other layer.

In order to obtain advantages in terms of rolling resistance, a need has long been felt to decrease the amount of rubber of the tread ply skim thus rendering belts that are lighter.
One of the solutions adopted in order to meet the aforementioned need is to utilize, instead of two pluralities of metal cords detached, a single metal ply that is coated with two layers of tread ply skim. In this way it was demonstrated that it is possible to halve the amount of tread ply skim, with a consequent reduction in the weight of the associated belts.

Despite the fact that the solution described above guarantees a reduction in the weight of the belts, it does however suffer from drawbacks owing to the continuous rubbing of the cords at the points of contact thereof with the ply. The continuous rubbing, in addition to causing rupturing of the ply, also gives rise to a loss of adhesion between the ply itself and the tread ply skim that covers it, undermining, consequently, the life of the tyre.
The inventors of the present invention have implemented a solution that allows to utilize a metal ply, thus reducing the weight of the belts as described above, without suffering from the disadvantages arising from the continuous rubbing of the cords at the points of contact thereof.

The object of the present invention is a belt for tyres comprising a ply made up of metal cords and two layers of tread ply skim that are arranged in such a way as to cover the ply; said belt being characterized in that said ply is coated with a protective composition comprising at least one cross-linkable unsaturated-chain polymer base and a surface-active compound; said protective composition being derived from an aqueous-based suspension applied to said ply and subsequently dried; said tread ply skim comprising the same cross-linkable unsaturated-chain polymer base present in said protective composition.

Here and hereinafter, the term "cross-linkable unsaturated-chain polymer base" refers to any natural or synthetic non-cross-linked polymer capable of assuming all of the chemical-physical and mechanical characteristics typically assumed by elastomers after cross-linking (vulcanization) with sulfur-based systems.

Preferably, the aqueous-based suspension comprises cobalt salts.
Preferably, the metal cords that make up the ply comprise cobalt salts on the surface thereof.
A further object of the present invention is a method of making belts for tyres; said method being characterized in that it comprises a covering step, wherein a ply made up of metal cords is coated with an aqueous-based suspension comprising at least one cross-linkable unsaturated-chain polymer base and a surfactant; a drying phase wherein the water is removed from said aqueous-based suspension; and a calendering step wherein two tread ply skim layers are arranged on opposite sides of the said ply; each of the two tread ply skim layers comprising the same cross-linkable unsaturated-chain polymer base included within the aqueous-based suspension.

Preferably, said covering step comprises an immersing operation of the ply within the aqueous-based suspension.
A still further object of the present invention is a tyre comprising the belt according to the present invention.
For a better understanding of the invention, the following examples are for illustrative and non-limiting purposes.
Three belt examples were made comprising the same ply made from metal cords. The first belt example (A) is a comparison example and comprises a ply made using metallic cords but not coated with the protective composition derived from the aqueous-based suspension; the second belt example (B) constitutes an example of the invention and differs from the comparison example A in that the ply has been coated with the protective composition deriving from the aqueous-based suspension and comprising cobalt salts; the third belt example (C) constitutes an example of the invention which differs from example B in that the aqueous-based suspension (and, therefore, the protective composition) does not comprise the cobalt salts which are instead present within the tread ply skim.

In Table I the composition in phr of the aqueous suspensions utilized in the belts of examples B and C is reported.

**TABLE I**

| Water | 67% by weight with respect to the solid part |
|---|---|
| Natural Rubber | 100 |
| Surfactant | 2 |
| Resin | 20 |
| Carbon black | 10 |
| ZnO | 1 |
| Sulfur | 1 |
| Accelerant | 1 |
| Cobalt salt* | 0.88 |

| | |
|---|---|
| * only present within the aqueous suspension related to belt B | |

The natural rubber is made up of a polymer base composed of natural origin cis-1,4-polyisoprene.
The surfactant utilized is CH₃(CH₂)₉CON(CH₃)CH₂COONa.
The resin utilized is a C5-C9 resin marketed under the name TACOLYN 100 by the Eastman company.
The accelerant utilized is N-tert-butyl-2-benzothiazyl-sulfenamide (TBBS).
The cobalt salt utilized is Co-boro neodecanoate.

Below, by way of example, a procedure for the preparation of the aqueous-based suspension is reported.
The suspensions were prepared by contemporaneously dispersing all of the ingredients reported in Table I within the volume of water such as to satisfy the percentage by weight indicated in Table I. The resulting aqueous solution was subjected to mechanical agitation for a period of time equal to 30 minutes, and thereafter, it was subjected to sonication for a period of time equal to 15 min.

The plies utilized for the example belts A-C were made using steel cords of 2+7x0.32 HT type.
In Table II the composition in phr of the tread ply skim compounds utilized for the example belts A-C is reported.

**TABLE II**

| | |
|---|---|
| Natural rubber | 100 |
| Carbon black | 40 |
| Sulfur | 7 |
| accelerator | 1.5 |
| Cobalt salt* | 0.88 |

| | |
|---|---|
| * absent from the tread ply skim compound related to belt B The specifications of the ingredients are the same as described in reference to Table I | |

Below, a procedure for the preparation of the tread ply skim compounds is reported.

### (1^{st} mixing step)

Before the start of the mixing, a mixer with tangential rotors (commonly called Banbury) and an internal volume of between 230 and 270 liters was loaded with the polymer base, the reinforcing filler and, where required, the cobalt salts, reaching a fill factor of 66-72%.

The mixer was operated at a speed of 40-60 rpm, and the mixture thus formed was discharged once a temperature of 140-160°C had been reached.

### (2^{nd} mixing step)

The vulcanization system was added to the mixture obtained from the previous step, reaching a fill factor of 63-67%. The mixer was operated at a speed of 20-40 rpm, and the mixture thus formed was discharged once a temperature of 100-110°C had been reached.

For examples B and C the plies made using the cords as defined above (for the A-C example belts the same type of ply was utilized) were subjected to a covering step wherein they were immersed within the respective aqueous suspensions thereof. After being placed under immersion and left for a period of time equal to 10 seconds, the plies were subjected to a drying process in order to remove the water and in order to leave the plies themselves coated with the solid part of the suspension that makes up the protective composition, object of the present invention.
At this point the plies were arranged between two layers of the compound as reported in Table II and the whole was subjected to a calendering operation.

Unlike that which is described above, the covering step cannot relate to plies that have already been formed but rather to individual filaments. In this case the ply will be made using cords that have already been coated with the solid part of the aqueous suspension with which they were coated.

The belts thus constructed were vulcanized and subsequently subjected under the same conditions to load stress utilizing the machine referred to as "SHOESHINE" and described in the article by van Bogaert, P. and van Bogaert, S., "Mechanics of Bend-Over-Sheave (shoeshine) Fatigue Testing of Cord-Rubber Laminates" Tire Science and Technology, Vol. 39, No. 3, July - September 2011, pp. 168-192.

Once belts A-C had been subjected to the aforementioned load stress, a separation was performed of the two parts of the ply-rubber composite by means of the application of a load and an estimate was made of both the percentage of ply coated with the rubber and the percentage of the number of filaments broken during the test.

In Table III the recorded percentage values are reported.

**TABLE III**

| | A | B | C |
|---|---|---|---|
| % of broken filaments | 17 | 6 | 7 |
| % of ply covering | 80 | 100 | 100 |

As can be seen from the data in Table III, the solution which is object of the present invention, makes it possible to allow the utilization of a metallic ply within belts, without, however, suffering the disadvantages listed above.
In other words, with the solution which is object of the present invention, it is possible to obtain the advantages associated with the use of a metallic ply (reduction in the amount of tread ply skim) without incurring premature rupture of the filaments of the ply and/or loss of adhesion between the metallic ply and the tread ply skim.

Finally, it should be noted that the present invention allows to avoid the use of cobalt salts within the tread ply skim compound. In fact, the cobalt salts can be loaded into the aqueous-based suspension (belt related to example B), greatly reducing the amount utilized, with the obvious advantages in terms of safety that this entails.

## Claims

1. A belt for tyres comprising a ply made up of metal cords and two layers of tread ply skim that are arranged to cover the ply; said belt being **characterized in that** said ply is coated with a protective composition comprising at least one cross-linkable unsaturated-chain polymer base and a surface-active compound; said protective composition being derived from an aqueous-based suspension applied to said ply and subsequently dried; said tread ply skim comprising the same cross-linkable unsaturated-chain polymer base present within said protective composition.

2. Belt according to claim 1, **characterized in that** the aqueous-based suspension comprises cobalt salts.

3. Belt according to claims 1 or 2, **characterized in that** the metal cords making up the ply comprise cobalt salts on the surface thereof.

4. Method for making belts for tyres; said method being **characterized in that** it comprises a covering step, wherein a ply made up of metal cords is coated with an aqueous-based suspension comprising at least one cross-linkable unsaturated-chain polymer base and a surfactant; a drying step wherein the water is removed from said aqueous-based suspension; and a calendering step wherein two tread ply skim layers are arranged on opposite sides of said body ply; each of the two tread ply skim layers comprising the same cross-linkable unsaturated-chain polymer base comprised within the aqueous-based suspension.

5. Method according to claim 4, **characterized in that** said covering step comprises an immersing operation of the ply within the aqueous-based suspension.

6. A tyre comprising the belt according to the present invention.

## Patentansprüche

1. Gürtel für Reifen, umfassend eine Lage, die aus Metallcorden aufgebaut ist, und zwei Schichten eines Laufflächenlagefilms, die so angeordnet sind, dass sie die Lage bedecken; wobei der Gürtel **dadurch gekennzeichnet ist, dass** die Lage mit einer schützenden Zusammensetzung beschichtet ist, die mindestens eine quervernetzbare, ungesättigte Kettenpolymerbasis und eine oberflächenaktive Verbindung umfasst; wobei die schützende Zusammensetzung von einer Suspension auf wässriger Basis abgeleitet ist, die auf die Lage aufgetragen und anschließend getrocknet wird; wobei der Laufflächenlagefilm die gleiche quervernetzbare, ungesättigte Kettenpolymerbasis umfasst, die in der schützenden Zusammensetzung vorhanden ist.

2. Gürtel nach Anspruch 1, **dadurch gekennzeichnet, dass** die Suspension auf wässriger Basis Kobaltsalze umfasst.

3. Gürtel nach den Ansprüchen 1 oder 2, **dadurch gekennzeichnet, dass** die Metallcorde, welche die Lage aufbauen, Kobaltsalze auf deren Oberfläche umfassen.

4. Verfahren zum Herstellen von Gürteln für Reifen; wobei das Verfahren **dadurch gekennzeichnet ist, dass** es einen Abdeckschritt umfasst, wobei eine aus Metallcorden aufgebaute Lage mit einer Suspension auf wässriger Basis beschichtet ist, umfassend mindestens eine quervernetzbare, ungesättigte Kettenpolymerbasis und einen oberflächenaktiven Stoff; einen Trocknungsschritt, wobei das Wasser aus der Suspension auf wässriger Basis entfernt wird; und einen Kalandrierschritt umfasst, wobei zwei Laufflächenlagefilmschichten auf gegenüberliegenden Seiten der Körperlage angeordnet sind; wobei jede der zwei Laufflächenlagefilmschichten die gleiche quervernetzbare, ungesättigte Kettenpolymerbasis umfasst, die in der Suspension auf wässriger Basis enthalten ist.

5. Verfahren nach Anspruch 4, **dadurch gekennzeichnet, dass** der Abdeckschritt einen Eintauchvorgang der Lage in die Suspension auf wässriger Basis umfasst.

6. Reifen, der den Gürtel gemäß der vorliegenden Erfindung umfasst.

## Revendications

1. Ceinture pour pneumatiques comprenant une nappe constituée de fils métalliques et de deux couches de gommage de nappe de bande de roulement disposées pour couvrir la nappe ; ladite ceinture étant **caractérisée en ce que** ladite nappe est revêtue d'une composition protectrice comprenant au moins une base polymère à chaîne insaturée réticulable et un composé tensioactif ; ladite composition protectrice étant dérivée d'une suspension aqueuse appliquée sur ladite nappe et ensuite séchée ; ledit gommage de nappe de bande de roulement comprenant la même base polymère à chaîne insaturée réticulable présente à l'intérieur de ladite composition protectrice.

2. Ceinture selon la revendication 1, **caractérisée en ce que** la suspension à base aqueuse comprend des sels de cobalt.

3. Ceinture selon les revendications 1 ou 2, **caractérisée en ce que** les fils métalliques constituant la nappe comprennent sur sa surface des sels de cobalt.

4. Procédé pour fabriquer des ceintures pour pneumatiques ; ledit procédé étant **caractérisé en ce qu'**il comprend une étape de recouvrement, dans laquelle une nappe constituée de fils métalliques est revêtue d'une suspension à base aqueuse comprenant au moins une base polymère à chaîne insaturée réticulable et un agent tensioactif ; une étape de séchage dans laquelle l'eau est éliminée de ladite suspension à base aqueuse ; et une étape de calandrage dans laquelle deux couches de gommage de nappe de bande de roulement sont disposées sur des côtés opposés de ladite nappe de corps ; chacune des deux couches de gommage de nappe de bande de roulement comprenant la même base polymère à chaîne insaturée réticulable comprise au sein de la suspension à base aqueuse.

5. Procédé selon la revendication 4, **caractérisé en ce que** ladite étape de recouvrement comprend une opération d'immersion de la nappe au sein de la suspension à base aqueuse.

6. Pneumatique comportant la ceinture selon la présente invention.
